# EUROPEAN PATENT APPLICATION

(11) **EP 4 723 329 A1**
(43) Date of publication of application: **08.04.2026**
(21) Application number: 25203967.2
(22) Date of filing: 23.09.2025
(51) Int. Cl.: H01M 50/209, H01M 50/503, H01M 50/529, H01M 50/533, H01M 50/528, H01M 50/531, H01M 50/538, H01M 50/54, H01M 50/249, H01M 50/258, H01M 50/298

(54) **BATTERY PACK AND VEHICLE**

(30) Priority: 23.09.2024 CN 202411331670; 23.09.2024 CN 202422326344 U; 06.11.2024 WO PCT/CN2024/130306
(71) Applicant: Eve Energy Co., Ltd., Huizhou, Guangdong 516006 (CN)
(72) Inventor: FU, Weiyin, Huizhou, 516006 (CN); ZHANG, Minglang, Huizhou, 516006 (CN)
(74) Representative: Studio Torta S.p.A.

(57) **Abstract**

Provided is a battery pack including: a case, cell modules, first electrical connection member(s), and a second electrical connection member (s). The case includes a receiving cavity, and first opening(s) and second opening(s) in communication with the receiving cavity. The cell modules are stacked in the receiving cavity; each cell module includes a first electrical connection end and a second electrical connection end disposed opposite to each other. The first electrical connection member is connected to first electrical connection ends of two adjacent cell modules. A portion of the first electrical connection member connected to the first electrical connection ends is exposed through the first opening. The second electrical connection member is connected to second electrical connection ends of two adjacent cell modules. A part of the second electrical connection member connected to the second electrical connection ends is exposed through the second opening.

## Description

### TECHNICAL FIELD

The present disclosure relate to the technical field of batteries, and more specifically, to a battery pack and a vehicle.

### BACKGROUND

As economy and science and technology develops, electric transportation, outdoor power supply or other large-sized electrical products have demands for long-term power supply endurance. A battery pack, as a significant energy storage carrier, is under constant research and development in recent years.

The battery pack may include a case, and a plurality of cell modules arranged inside the case. The plurality of cell modules are in series and in parallel assembled to each other by a copper busbar.

However, during a process of assembling the battery pack, the cell module and the copper busbar are alternately arranged for assembling. That is, after a latter cell module is assembled to a former cell module, the two cell modules are connected in series to each other via the copper busbar. Since a voltage, after the plurality of cell modules are in series assembled to each other, is large, if any assembling error occurs during the assembling process, the battery pack may have a short circuit and other undesirable phenomena, and an operator who assembles the battery pack may also be injured.

### SUMMARY

In a first aspect, a battery pack includes: a case, a plurality of cell modules, at least one first electrical connection member, and at least one second electrical connection member. The case includes a receiving cavity, at least one first opening communicating with the receiving cavity, and at least one second opening communicating with the receiving cavity. The plurality of cell modules are stacked in the receiving cavity along a first direction; each of the cell modules includes a first electrical connection end and a second electrical connection end disposed opposite to the first electrical connection end in a second direction; the first direction intersects with the second direction. Each of the at least one first electrical connection member is connected to the first electrical connection end of one of two adjacent cell modules of the plurality of cell modules and the first electrical connection end of the other one of the two adjacent cell modules of the plurality of cell modules; a portion of the first electrical connection member connected to the first electrical connection end is exposed through a respective one of the at least one first opening. Each of the at least one second electrical connection member is connected to the second electrical connection end of one of two adjacent cell modules of the plurality of cell modules and the second electrical connection end of the other one of the two adjacent cell modules of the plurality of cell modules; a portion of the second electrical connection member connected to the second electrical connection end is exposed through a respective one of the at least one second opening.

In a second aspect, a vehicle includes: a vehicle body and the battery pack of the first aspect being assembled inside the vehicle body.

According to the present disclosure, the first opening(s) and the second opening(s) are defined in the case. Therefore, the plurality of cell modules may be stacked in the receiving cavity firstly, and subsequently, the first electrical connection member is connected to the two first electrical connection ends of the two adjacent cell modules through the first opening of the case; and the second electrical connection member is connected to the two second electrical connection ends of two adjacent cell modules through the second opening of the case. In this way, in-series connection of the plurality of cell modules is achieved. Therefore, a connection manner in which two cell modules are connected in series to each other after the latter cell module is assembled on the former cell module, is avoided. Instead, the plurality of cell modules are firstly stacked in the receiving cavity of the case, and subsequently, the stacked cell modules are connected to each other in series. In this way, even when any staff reversely places a certain one of the plurality of cell modules during the process of assembling the cell modules in the receiving cavity, the battery pack may not have the short circuit.

### BRIEF DESCRIPTION OF THE DRAWINGS

FIG. 1 is a structural schematic view of a battery pack according to an embodiment of the present disclosure.
FIG. 2 is a structural schematic view of a cell module according to an embodiment of the present disclosure.
FIG. 3 is a structural schematic view of a first electrical connection member according to an embodiment of the present disclosure.
FIG. 4 is a structural schematic view of a portion of the battery pack according to an embodiment of the present disclosure.
FIG. 5 is another structural schematic view of a portion of a battery pack according to an embodiment of the present disclosure.
FIG. 6 is yet another structural schematic view of a portion of a battery pack according to an embodiment of the present disclosure.
FIG. 7 is yet another structural schematic view of a portion of a battery pack according to an embodiment of the present disclosure.
FIG. 8 is a structural schematic view of a portion of the battery pack according to another embodiment of the present disclosure.
FIG. 9 is another structural schematic view of a cell module according to an embodiment of the present disclosure.
FIG. 10 is yet another structural schematic view of a cell module according to an embodiment of the present disclosure.

### DETAILED DESCRIPTIONS

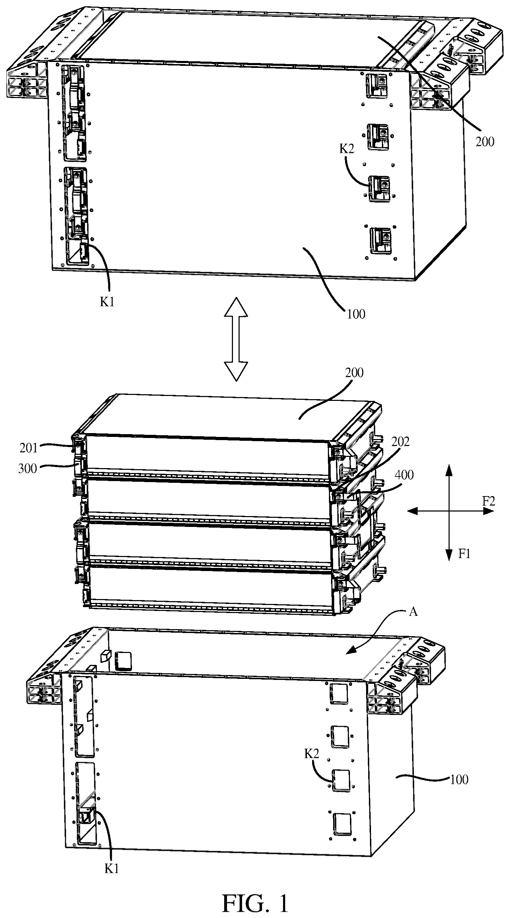

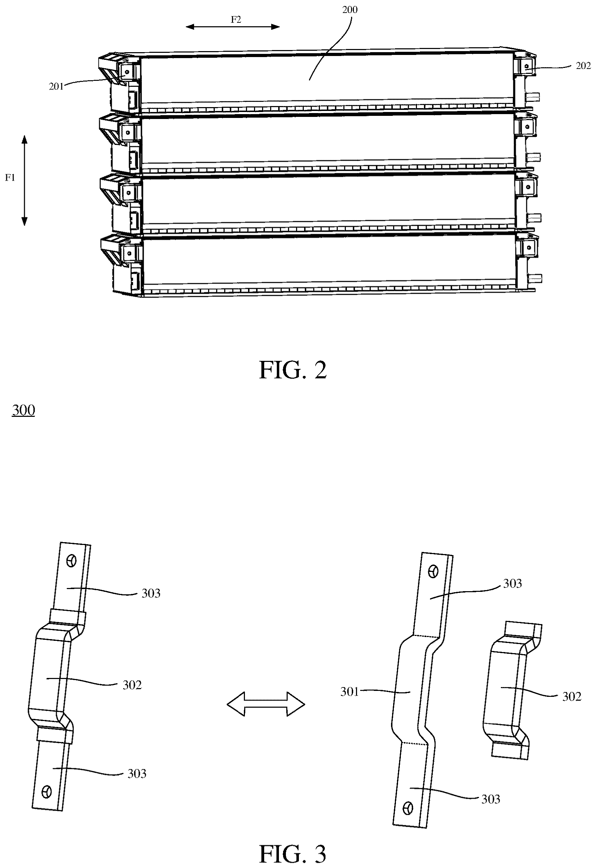

The present disclosure provides a battery pack, as shown in FIGS. 1 and 2, in which FIG. 1 is a structural schematic view of the battery pack according to an embodiment of the present disclosure; and FIG. 2 is a structural schematic view of a cell module according to an embodiment of the present disclosure. The battery pack 000 may include: a case 100, a plurality of cell modules 200, at least one first electrical connection member 300 and at least one second electrical connection member 400.

The case 100 in the battery pack 000 may include a receiving cavity A, a first opening K1, and a second opening K2. The first opening K1 and the second opening K2 communicate with the receiving cavity A.

The plurality of cell modules 200 in the battery pack 000 may be stacked in a first direction F1 inside the receiving cavity A. Each of the plurality of cell modules 200 may have a first electrical connection end 201 and a second electrical connection end 202, which are disposed opposite to each other in a second direction F2.

Two first electrical connection ends 201 of the two adjacent cell modules 200 of the plurality of cell modules 200 may be electrically connected to each other. In this way, the two adjacent cell modules 200 may be connected in series to each other based on electrical connection between the two first electrical connection ends 201 of the two adjacent cell modules 200. Similarly, two second electrical connection ends 202 of the two adjacent cell modules 200 may be electrically connected to each other, such that the two adjacent cell modules 200 may be electrically connected to each other in series based on the electrical connection between the two second electrical connection ends 202 of the two adjacent cell modules 200.

The first direction F1 may intersect the second direction F2. Exemplarily, the first direction F1 may be perpendicular to the second direction F2.

The first electrical connection member 300 of the battery pack 000 may be connected to the first electrical connection ends 201 of the two adjacent cell modules 200. That is, one end of the first electrical connection member 300 may be connected to one of the two first electrical connection ends 201 of one of the two adjacent cell modules, and the other end of the first electrical connection member 300 may be connected to the other one of the two first electrical connection ends 201 of the other one of the two adjacent cell modules. In this way, the two first electrical connection ends 201 of the two adjacent cell modules 200 may be connected to each other by one first electrical connection member 300, such that the two adjacent cell modules 200 may be connected to each other in series.

A portion of the first electrical connection member 300 of the battery pack 000 that is connected to the first electrical connection end 201 may be exposed through the first opening K1. In this case, the plurality of cell modules 200 may be stacked in the receiving cavity A, and subsequently, the first electrical connection member 300 may be connected to the two first electrical connection ends 201 of the two adjacent cell modules 200 through the first opening K1, and the in-series connection between the two adjacent cell modules 200 can be achieved.

One second electrical connection member 400 of the battery pack 000 may be connected to two second electrical connection ends 202 of the two adjacent cell modules 200. That is, one end of the second electrical connection member 400 may be connected to one of the two second electrical connection ends 202 of one of the two adjacent cell modules; and the other end of the second electrical connection member 400 may be connected to the other one of the two second electrical connection ends 202 of the other one of the two adjacent cell modules. In this way, the two second electrical connection ends 202 of the two adjacent cell modules 200 may be connected to each other by one second electrical connection member 400, and the two adjacent cell modules 200 may be connected in series to each other.

A portion of the second electrical connection member 400 of the battery pack 000 that is connected to the second electrical connection end 202 may be exposed through the second opening K2. In this way, after the plurality of cell modules 200 are stacked in the receiving cavity A, the two second electrical connection ends 202 of two adjacent cell modules 200 can be connected to each other via the second electrical connection member 400 through the second opening K2 of the case 100, such that the in-series connection between the two adjacent cell modules 200 can be achieved.

To be noted that in the related art, during a process of assembling the battery pack, cell modules and copper busbars are alternately arranged for assembling. That is, after a latter battery cell module is mounted on a former battery cell module, the two cell modules are connected in series with each other by a copper busbar. A voltage of the plurality of cell modules being in-series connected to each other is larger. Therefore, when any assembling error is made by a staff during the assembling process, for example, when the latter cell module is assembled reversely onto the former cell module, the battery pack may have a short circuit or other undesired issues, and a staff may be injured.

In the present embodiment, since the first opening K1 and the second opening K2 are defined in the box 100, the plurality of cell modules 200 may be firstly stacked in the receiving cavity A, and subsequently, the first electrical connection member 300 is connected to the first electrical connection ends 201 of two adjacent cell modules 200 through the first opening K1 in the case 100; and the second electrical connection member 400 is connected to the second electrical connection ends 202 of the two adjacent cell modules 200 through the second opening K2 in the case 100. In this way, the in-series connection between the two adjacent cell modules 200 can be achieved.

To be noted that, in a case that the plurality of cell modules 200 include a first cell module, a second cell module, and a third cell module that are sequentially distributed; and the second cell module may be disposed between the first cell module and the third cell module. The first electrical connection end 201 of the first cell module may be connected to the first electrical connection end 201 of the second cell module via one first electrical connection member 300, and the second electrical connection end 202 of the second cell module may be connected to the second electrical connection end 202 of the third cell module via one second electrical connection member 300. In this case, the first cell module, the second cell module and the third cell module can be connected in series to each other by the first electrical connection member 300 and the second electrical connection member 300 cooperatively.

In this way, it is not the case that two cell modules 200 are connected in series to each other after the latter core module 200 is assembled onto the former core module 200. Instead, the cell modules 200 are firstly stacked within the receiving cavity A of the case 100, and subsequently, the cell modules 200 stacked within the receiving cavity A of the case 100 are connected to each other in series. In this way, even when any staff places a certain cell module 200 reversely during the process of assembling the cell modules 200 in the receiving cavity A, the battery pack 000 may not have the short circuit.

In summary, the present disclosure provides the battery pack including: the case, the plurality of cell modules, at least one first electrical connection member and at least one second electrical connection member. The first opening and the second opening are defined in the case. Therefore, the plurality of cell modules may be stacked in the receiving cavity firstly, and subsequently, the first electrical connection member is connected to the two first electrical connection ends of the two adjacent cell modules through the first opening of the case; and the second electrical connection member is connected to the two second electrical connection ends of two adjacent cell modules through the second opening of the case. In this way, in-series connection of the plurality of cell modules is achieved. Therefore, a connection manner in which two cell modules are connected in series to each other after the latter cell module is assembled on the former cell module, is avoided. Instead, the plurality of cell modules are firstly stacked in the receiving cavity of the case, and subsequently, the stacked cell modules are connected to each other in series. In this way, even when any staff reversely places a certain one of the plurality of cell modules during the process of assembling the cell modules in the receiving cavity, the battery pack may not have the short circuit.

In an embodiment, as shown in FIG. 1, the number of first openings K1 in the case 100 may be at least one, and the two first electrical connection ends 201 of the two adjacent cell modules 200 may be exposed through one first opening K1. The at least one first electrical connection member 300 may be arranged in one-to-one correspondence with the at least one first opening K1 in the case 100. Each of the at least one first electrical connection member 300 may pass through a corresponding one of the at least one first opening K1 to be connected to the two first electrical connection ends 201 of the two adjacent cell modules 200. In this way, the two adjacent cell modules 200 are connected in series to each other.

Exemplarily, firstly, after the plurality of cell modules 200 are stacked in the receiving cavity A, the two first electrical connection ends 201 of the two adjacent cell modules 200 are exposed through one first opening K1 of the case 100. Subsequently, the first electrical connection member 300 may pass through the corresponding first opening K1 of the case 100 to be connected with the two first electrical connection ends 201 of the two adjacent cell modules 200, such that the two adjacent cell modules 200 are connected in series to each other.

In the present disclosure, as shown in FIG. 3, FIG. 3 is a structural schematic view of the first electrical connection member according to an embodiment of the present disclosure. The first electrical connection member 300 of the battery pack 000 may include: a first conduction portion 301, a first insulating sleeve 302, and two first connection pins 303.

The first conduction portion 301 of the first electrical connection member 300 may be connected to the two first connection pins 303. That is, a first end of the first conduction portion 301 may be connected to one of the two first connection pins 303, and a second end of the first conduction portion 301 may be connected to the other one of the two first connection pins 303. In this way, electrical conduction between the two first connection pins 303 can be achieved based on the first conduction portion 301 being electrically conducted. Exemplarily, materials of the first conduction portion 301 and the two first connection pins 303 of the first electrical connection member 300 may include: copper.

The first insulating sleeve 302 of the first electrical connection member 300 may be sleeved on the first conduction portion 301. To be noted that the staff needs to connect, by hand holding, the first electrical connection member 300 to the two first electrical connection ends 201 of the two adjacent cell modules 200. In this case, the staff may hand-hold the first insulating sleeve 302 of the first electrical connection member 300, so it is ensured that the first insulating sleeve provides insulation protection, thereby protecting the staff from being harmed during performing the connection, such that safety of the staff during assembling the battery pack 000 can be improved.

The two first connection pins 303 of the first electrical connection member 300 of the battery pack 000 may be respectively connected to the first electrical connection ends 201 of the two adjacent cell modules 200. Exemplarily, the two first connection pins 303 of the first electrical connection member 300 may be fixedly connected to the first electrical connection ends 201 of the two adjacent cell modules 200 by screws. For example, the first connection pin 303 may have a first connection hole, and the first electrical connection end 201 of the cell module 200 may have a second connection hole corresponding to the first connection hole. The screw may pass through the first connection hole and the second connection hole to securely connect the first connection pin 303 to the first electrical connection end 201.

To be noted that the staff may hand-hold the first electrical connection member 300 to enable the first electrical connection member 300 to pass through the corresponding first opening K1 of the case 100, and then screws are used to securely connect the two first connection pins 303 of the first electrical connection member 300 to the first electrical connection ends 201 of the two adjacent cell modules 200.

In this way, by enabling the two first connection pins 303 of the first electrical connection member 300 to be respectively connected to the first electrical connection ends 201 of the two adjacent cell modules 200, the two adjacent cell modules 200 can be connected to each other in series.

In some embodiments, as shown in FIGS. 1 and 3, for the first electrical connection member 300, the first conduction portion 301 may protrude towards the first opening K1 with respect to the two first connection pins 303. In this way, it is ensured that, during a process of respectively connecting the two first connection pins 303 of the first electrical connection member 300 with the first electrical connection ends 201 of the two adjacent cell modules 200, the first conduction portion 301 does not affect the connection between the first connection pins 303 and the first electrical connection ends 201, thereby ensuring that connection between the first connection pins 303 and the first electrical connection ends 201 is more stable.

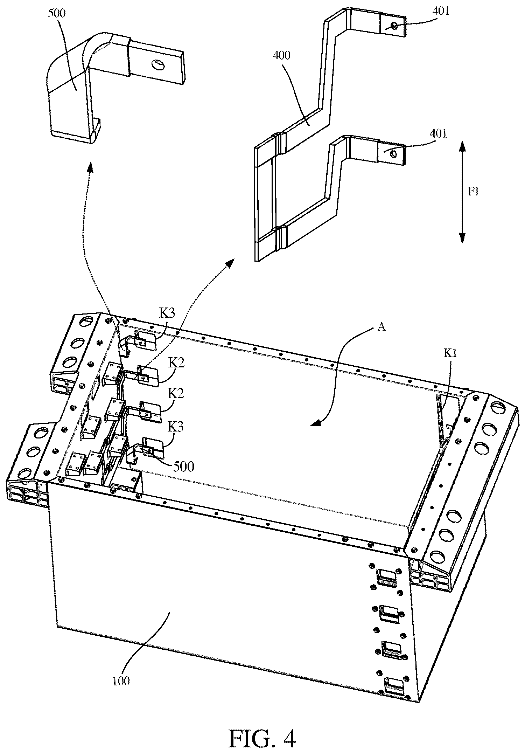

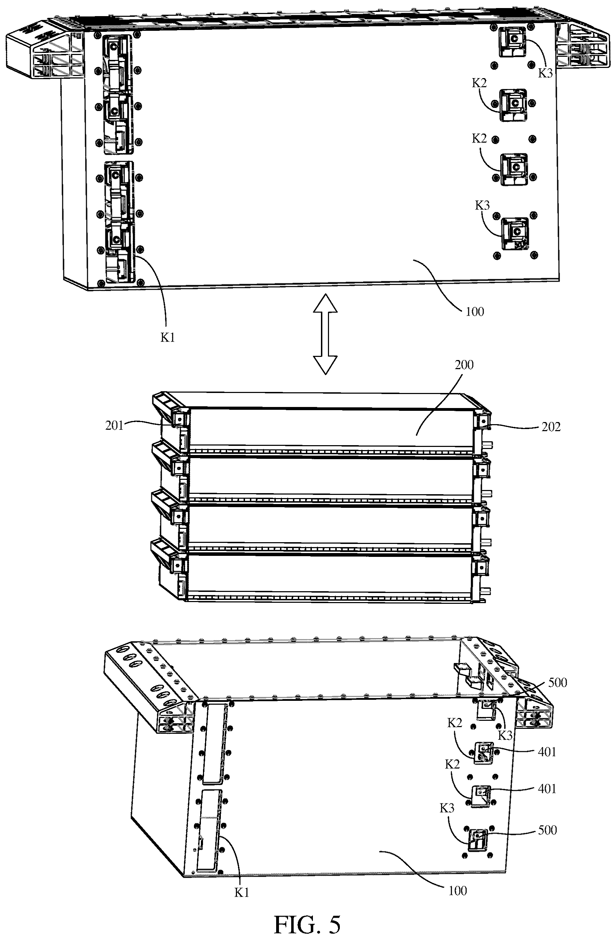

In the present embodiment, as shown in FIGS. 4 and 5, FIG. 4 is a structural schematic view of a portion of the battery pack according to an embodiment of the present disclosure; and FIG. 5 is another structural schematic view of a portion of a battery pack according to an embodiment of the present disclosure. The second electrical connection member 400 of the battery pack 000 may be fixedly arranged inside the receiving cavity A, and two ends of the second electrical connection member 400 may have two second connection pins 401.

To be noted that the second electrical connection member 400 of the battery pack 000 may further include: a second conduction portion and a second insulating sleeve. The second conduction portion of the second electrical connection member 400 may be connected to the two second connection pins 401. That is, a first end of the second conduction portion may be connected to one of the two second connection pins 401, and a second end of the second conduction portion may be connected to the other one of the two second connection pins 401. In this way, electrical conduction between the two second connection pins 401 can be achieved based on the second conduction portion being electrically conducted. Exemplarily, materials of the second conduction portion and the two second connection pins 401 of the second electrical connection member 400 may include: copper.

The second insulating sleeve of the second electrical connection member 400 may be sleeved on the second conduction portion, such that the second insulating sleeve may provide insulation protection for the second electrical connection member 400.

Both of the two second connection pins 401 of the second electrical connection member 400 may be exposed through the second opening K2, and the two second connection pins 401 may correspond to the two adjacent cell modules 200, respectively. Each of the two second connection pins 401 may be connected to the second electrical connection end 202 of a corresponding one of the two adjacent cell modules 200. Exemplarily, the two second connection pins 401 of the second electrical connection member 400 may be fixedly connected to the two second electrical connection ends 202 of the two adjacent cell modules 200 by screws. For example, the second connection pin 401 may have a third connection hole, and the second electrical connection end 202 of the cell module 200 may have a fourth connection hole corresponding to the third connection hole. A screw may pass through the third connection hole and the fourth connection hole to securely connect the second connection pin 401 to the second electrical connection end 202.

In this case, the second electrical connection member 400 can be fixedly arranged in the receiving cavity A and the two second connection pins 401 of the second electrical connection member 400 can both be exposed through the second opening K2. Therefore, after the plurality of cell modules 200 are stacked in the receiving cavity A in the case 100, the two second connection pins 401 of the second electrical connection member 400 may correspond to the two second electrical connection ends 202 of the two adjacent cell modules 200 respectively. In this way, the staff may use screws to securely connect, through the second opening K2 of the case 100, the two second connection pins 401 of the second electrical connection member 400 to the second electrical connection ends 202 of the two adjacent cell modules 200.

In this way, as the two second connection pins 401 of the second electrical connection member 400 are connected to the second electrical connection ends 202 of the two adjacent cell modules 200, the two adjacent cell modules 200 can be connected to each other in series.

In the present embodiment, as shown in FIG. 4, at least two second openings K2 are defined in the case 100. The at least two second openings K2 of the case 100 may be arranged in one-to-one correspondence with at least two second connection pins 401. Each of the at least two second connection pins 401 may be exposed through a corresponding one of the at least two second openings K2. That is, the at least two second connection pins 401 do not correspond, at the same time, to one second opening K2 of the case 100. In this way, a portion of the cell modules 200 that is exposed through the second openings K2 of the case 100 can be reduced, such that the battery pack 000 can be assembled more safely.

In the present embodiment, as shown in FIGS. 4 and 5, the case 100 of the battery pack 000 may further have two third openings K3 in communication with the receiving cavity A. In a first direction F1, the at least two second openings K2 of the case 100 may be distributed between the two third openings K3.

The battery pack 000 may further include two third electrical connection members 500. The two third electrical connection members 500 may be arranged in one-to-one correspondence with the two third openings K3 of the case 100 and may be arranged in one-to-one correspondence with two of the plurality of cell modules 200 distributed at outermost two sides of the plurality of cell modules 200.

To be noted that the third electrical connection members 500 may be fixedly arranged within the receiving cavity A. Each of the third electrical connection members 500 may include: a third conduction portion, a third insulating sleeve, and two third connection pins. The third conduction portion of the third electrical connection member 500 may be connected to the two third connection pins. That is, a first end of the third conduction portion may be connected to one of the two third connection pins, and a second end of the third conduction portion may be connected to the other one of the two third connection pins. In this way, the two third connection pins can be electrically connected to each other based on the third conduction portion being electrically conducted. Exemplarily, materials of the third conduction portion and the two third connection pins of the third electrical connection member 500 may include: copper.

The third insulating sleeve of the third electrical connection member 500 may be sleeved on the third conduction portion, such that the third insulating sleeve provides insulation protection for the third electrical connection member 500.

Each third electrical connection member 500 of the battery pack 000 may be connected to the second electrical connection end 202 of a corresponding cell module 200. Each third electrical connection member 500 of the battery pack 000 may be connected to the second electrical connection end 202 of the corresponding cell module 200 via one of the two third connection pins of the third electrical connection member 500. Exemplarily, the two third connection pins of the third electrical connection member 500 may be fixedly connected to the second electrical connection end 202 of the corresponding cell module 200 by screws. For example, the third connection pin may have a fifth connection hole, and the second electrical connection end 202 of the corresponding cell module 200 may have a sixth connection hole corresponding to the fifth connection hole, such that a screw may pass through the fifth connection hole and the sixth connection hole to securely connect the third connection pin to the second electrical connection end 202.

A portion of each third electrical connection member 500 that is connected to the second electrical connection end 202 may be exposed through the corresponding third opening K3. Therefore, after the plurality of cell modules 200 are stacked in the receiving cavity A in the box 100, two third connection pins of the third electrical connection member 500 may correspond to second electrical connection end 202 of a corresponding cell module 200. In this way, the staff may use the screws to securely connect, through the third openings K3, the two third connection pins of the third electrical connection member 500 to the second electrical connection end 202 of the corresponding cell module 200.

To be noted that a portion of each third electrical connection member 500 of the battery pack 000 that is connected to the second electrical connection end 202 of the corresponding cell module 200 is subsequently connected to a vehicle body. That is, one third electrical connection member 500 of the battery pack 000 may serve as a positive electrode, and the other third electrical connection member 500 of the battery pack 000 may serve as a negative electrode.

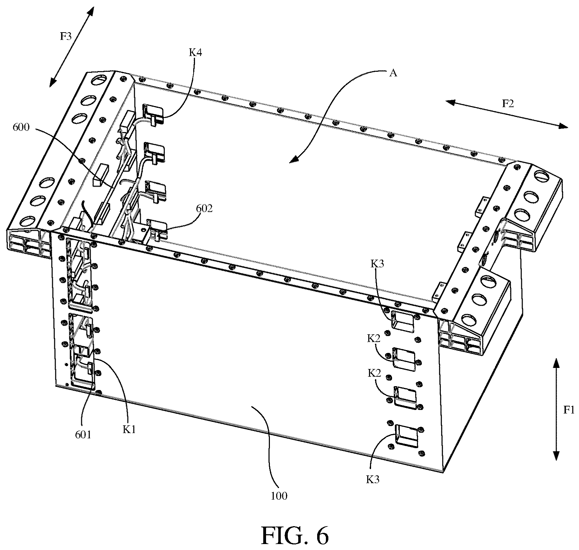

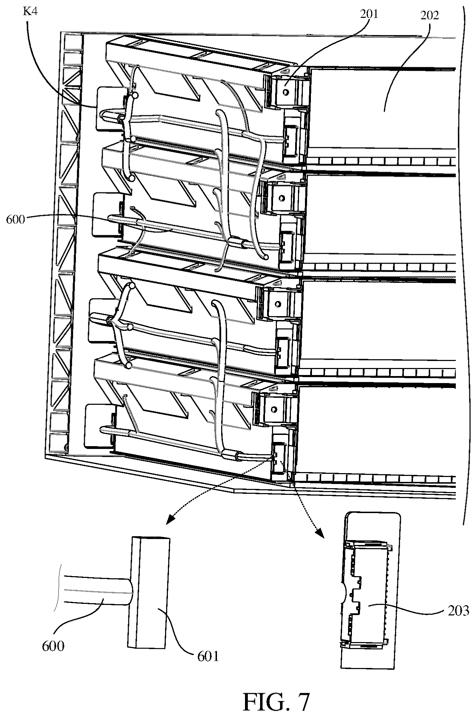

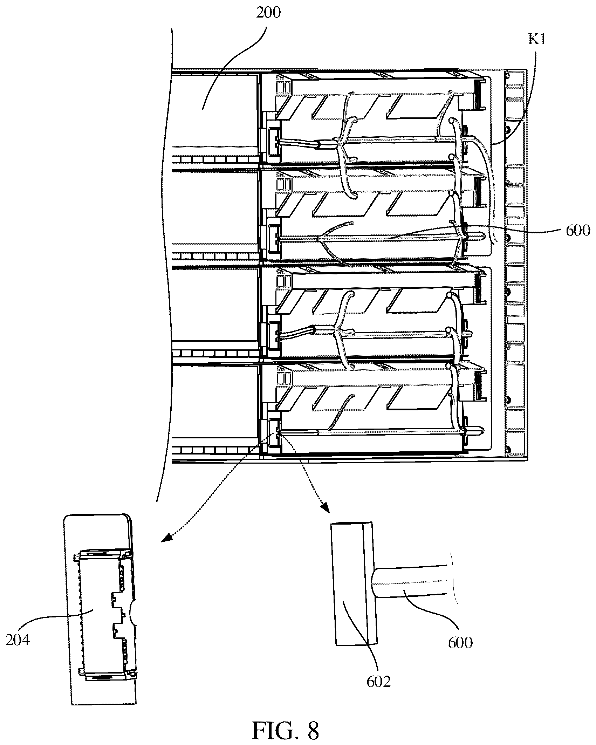

In the present embodiment, as shown in FIG. 6, FIG. 7 and FIG. 8, FIG. 6 is yet another structural schematic view of a portion of a battery pack according to an embodiment of the present disclosure; FIG. 7 is yet another structural schematic view of a portion of a battery pack according to an embodiment of the present disclosure; and FIG. 8 is a structural schematic view of a portion of the battery pack according to another embodiment of the present disclosure. The case 100 of the battery pack 000 may further include fourth opening(s) K4 communicating with the receiving cavity A. In a third direction F3, the first opening K1 and the fourth opening K4 may be respectively distributed at two sides of the case 100. The third direction F3 may intersect with both the first direction F1 and the second direction F2. Exemplarily, the third direction F3 may be perpendicular to both the first direction F1 and the second direction F2.

As shown in FIGS. 7 and 8, each cell module 200 of the battery pack 000 may have a first wiring terminal 203 and a second wiring terminal 204 that are disposed opposite to each other in the third direction F3. The first wiring terminal 203 of the cell module 200 may be configured to receive temperature information and cell voltage information collected by a sensor. The second wiring terminal 204 of the cell module 200 is subsequently connected to a battery management system to transmit the collected temperature information and cell voltage information to the battery management system.

The battery pack 000 may further include: a wire harness group 600 fixedly arranged in the receiving cavity A in the case 100. The wire harness group 600 may have a plurality of third wiring terminals 601 and a plurality of fourth wiring terminals 602. The plurality of third wiring terminals 601 may be arranged in one-to-one correspondence with the plurality of cell modules 200; and the plurality of fourth wiring terminals 602 may be arranged in one-to-one correspondence with the plurality of cell modules 200.

Each of the plurality of third wiring terminals 601 in the wire harness group 600 may be connected to the first wiring terminal 203 of the corresponding one cell module 200. Exemplarily, each third wiring terminal 601 in the wire harness group 600 may be plugged with the first wiring terminal 203 of the corresponding one cell module 200. For example, the first wiring terminal 203 of the cell module 200 may have a female chassis connector, and the third wiring terminal 601 in the wire harness group 600 may be a male chassis connector, thereby ensuring that each third wiring terminal 601 in the wire harness group 600 can be properly plugged with the first wiring terminal 203 of the corresponding one cell module 200.

Third wiring terminal 601 and the first wiring terminal 203 connected may be exposed through the first openings K1 of the case 100. In this case, the staff may correspondingly plug the third wiring terminal 601 of the wire harness group 600 with the first wiring terminal 203 of the cell module 200 through the first opening K1 of the case 100.

Each of the plurality of fourth wiring terminals 602 in the wire harness group 600 may be connected to the second wiring terminal 204 of a corresponding one cell module 200. Exemplarily, each fourth wiring terminal 602 in the wire harness group 600 may be plugged with the second wiring terminal 204 of the corresponding one cell module 200. For example, the second wiring terminal 204 of the cell module 200 may have a female chassis connector, and the fourth wiring terminal 602 in the wire harness group 600 may be a male chassis connector, thereby ensuring that each fourth wiring terminal 602 in the wire harness group 600 can be properly plugged with the second wiring terminal 204 of the corresponding one cell module 200.

The fourth wiring terminal 602 and the second wiring terminal 204 connected may be exposed through the fourth openings K4 in the case 100. In this case, the staff may correspondingly plug the fourth wiring terminal 602 in the wire harness group 600 with the second wiring terminal 204 of the cell module 200 through the fourth opening K4 in the case 100.

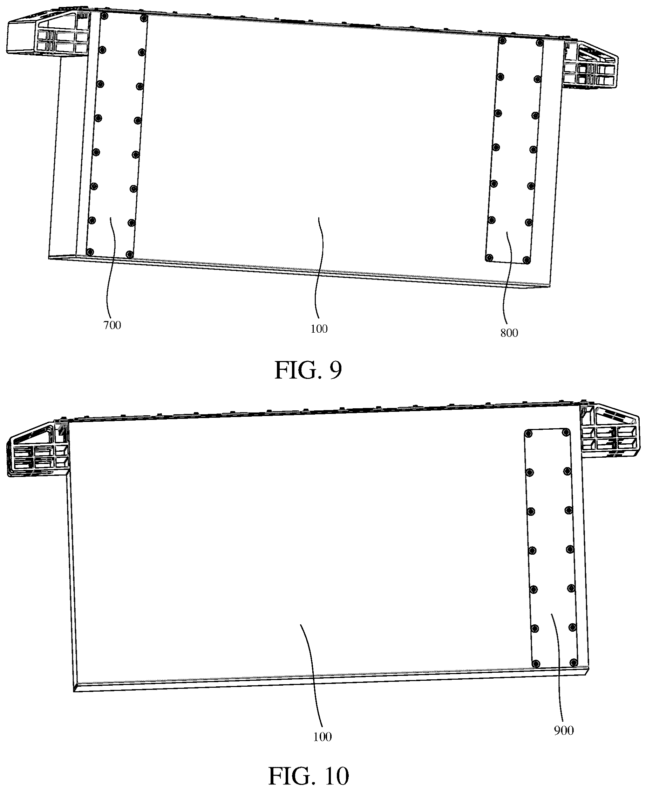

In the present disclosure, as shown in FIGS. 9 and 10, FIG. 9 is another structural schematic view of a cell module according to an embodiment of the present disclosure; and FIG. 10 is yet another structural schematic view of a cell module according to an embodiment of the present disclosure. The battery pack 000 may further include: a first cover plate 700, a second cover plate 800, and a third cover plate 900.

The first cover plate 700 of the battery pack 000 may be connected to the case 100, and may cover the first opening K1 of the case 100. Therefore, dust and water steams can be prevented, by the first cover plate 700, from entering an interior of the battery pack 000 from the first opening K1 of the case 100

The second cover plate 800 of the battery pack 000 may be connected to the case 100, and may cover the second opening K2 of the case 100. Therefore, dust and water steams are prevented, by the second cover plate 800, from entering the interior of the battery pack 000 from the second opening K2 of the case 100.

The third cover plate 900 of the battery pack 000 may be connected to the case 100 and may cover the fourth opening K4 of the case 100. Therefore, dust and water steams are prevented, by the third cover plate 900, from entering the interior of the battery pack 000 from the fourth opening K4 of the case 100.

In summary, the present disclosure provides the battery pack including: the case, the plurality of cell modules, at least one first electrical connection member and at least one second electrical connection member. The first opening(s) and the second opening(s) are defined in the case. Therefore, the plurality of cell modules may be stacked in the receiving cavity firstly, and subsequently, the first electrical connection member is connected to the two first electrical connection ends of the two adjacent cell modules through the first opening of the case; and the second electrical connection member is connected to the two second electrical connection ends of two adjacent cell modules through the second opening of the case. In this way, in-series connection of the plurality of cell modules is achieved. Therefore, a connection manner in which two cell modules are connected in series to each other after the latter cell module is assembled on the former cell module, is avoided. Instead, the plurality of cell modules are firstly stacked in the receiving cavity of the case, and subsequently, the stacked cell modules are connected to each other in series. In this way, even when any staff reversely places a certain one of the plurality of cell modules during the process of assembling the cell modules in the receiving cavity, the battery pack may not have the short circuit.

The present disclosure further provides a vehicle, which may be a hybrid vehicle, a pure gas vehicle, or a programmable electric vehicle and the like. The vehicle includes: a vehicle body, and a battery pack mounted in the vehicle body; and the battery pack may be any of the above-mentioned battery packs.

## Claims

1. A battery pack, comprising: a case (100), a plurality of cell modules (200), at least one first electrical connection member (300), and at least one second electrical connection member (400);
wherein the case (100) comprises a receiving cavity (A), at least one first opening (K1) in communication with the receiving cavity (A), and at least one second opening (K2) in communication with to the receiving cavity (A);
the plurality of cell modules (200) are stacked in the receiving cavity (A) along a first direction;
each of the plurality of cell modules (200) comprises a first electrical connection end (201) and a second electrical connection end (202) disposed opposite to the first electrical connection end in a second direction (F2); the first direction (F1) intersects with the second direction (F2);
each of the at least one first electrical connection member (300) is connected to the first electrical connection end (201) of one of two adjacent cell modules (200) of the plurality of cell modules (200) and the first electrical connection end (201) of the other one of the two adjacent cell modules (200) of the plurality of cell modules (200); a portion of the first electrical connection member (300) connected to the first electrical connection end (201) is exposed through a respective one of the at least one first opening (K1);
each of the at least one second electrical connection member (400) is connected to the second electrical connection end (202) of one of two adjacent cell modules (200) of the plurality of cell modules (200) and the second electrical connection end (202) of the other one of the two adjacent cell modules (200) of the plurality of cell modules (200); a portion of the second electrical connection member (400) connected to the second electrical connection end (202) is exposed through a respective one of the at least one second opening (K2).

2. The battery pack according to claim 1, wherein the first electrical connection end (201) of one of the two adjacent cell modules (200) and the first electrical connection end (201) of the other one of the two adjacent cell modules (200) are exposed through a same one of the at least one first opening (K1);
the at least one first electrical connection member (300) and the at least one first opening (K1) are arranged in one-to-one correspondence with each other; each of the at least one first electrical connection member (300) passes through a corresponding one of the at least one first opening (K1) to be connected to the first electrical connection end (201) of a corresponding one of the two adjacent cell modules (200).

3. The battery pack according to claim 2, wherein the first electrical connection member (300) comprises: a first conduction portion (301), a first insulating sleeve (302), and two first connection pins (303);
the first conduction portion (301) is connected to the two first connection pins (303), and the first insulating sleeve (302) is sleeved on the first conduction portion (301);
each of the two first connection pins (303) of the first electrical connection member (300) is connected to the first electrical connection end (201) of the corresponding one of two adjacent cell modules (200).

4. The battery pack according to claim 3, wherein the first conduction portion (301) is protruded towards the at least one first opening (K1) with respect to the two first connection pins (303).

5. The battery pack according to claim 1, wherein the at least one second electrical connection member (400) is fixedly arranged in the receiving cavity (A); each of the at least one second electrical connection member (400) comprises two second connection pins (401) respectively disposed at two ends of the second electrical connection member; the two second connection pins (401) are both exposed through a corresponding one of the at least one second opening (K2); each of the two second connection pins (401) corresponds to a corresponding one of the two adjacent cell modules (200); each of the two second connection pins (401) is connected to the second electrical connection end (202) of the corresponding one of the two adjacent cell modules (200).

6. The battery pack according to claim 5, wherein the second electrical connection member (400) further comprises a second conduction portion and a second insulating sleeve, the second conduction portion is connected to the two second connection pins (401), and the second insulating sleeve is sleeved on the second conduction portion.

7. The battery pack according to claim 5, wherein the at least one second opening (K2) comprises at least two second openings; the at least two second openings (K2) and at least two of the at least one second connection pin (401) are arranged in one-to-one correspondence to each other; each of the at least two second connection pins (401) is exposed through a corresponding one of the at least two second openings (K2).

8. The battery pack according to any one of claims 1 to 7, wherein the case (100) further comprises two third openings (K3) in communication with the receiving cavity (A); and the at least one second opening (K2) is distributed between the two third openings (K3) in the first direction (F1);
the battery pack further comprises: two third electrical connection members (500); the two third electrical connection members (500) are arranged in one-to-one correspondence with the two third openings (K3) and are arranged in one-to-one correspondence with two outermost cell modules (200) of the plurality of cell modules (200), wherein the two outermost cell modules (200) are located at outermost two sides of the plurality of cell modules (200);
wherein each of the two third electrical connection members (500) is connected to the second electrical connection end (202) of a corresponding one of the two outermost cell modules (200); a portion of each of the two third electrical connection members (500) connected to the second electrical connection end (202) is exposed through a corresponding one of the two third openings (K3).

9. The battery pack according to claim 8, wherein each of the two third electrical connection members (500) comprises a third conduction portion, a third insulating sleeve, and two third connection pins;
the third insulating sleeve is sleeved on the third conduction portion, and the third conduction portion connects between the two third connection pins.

10. The battery pack according to claim 9, wherein the second electrical connection end (202) of each of the two outermost cell modules (200) is connected to the two third connection pins.

11. The battery pack according to claim 8, wherein one of the two third electrical connection members (500) is configured as a positive electrode of the battery pack; and the other one of the two third electrical connection members (500) is configured as a negative electrode of the battery pack.

12. The battery pack according to any one of claims 1 to 11, wherein the case (100) further comprises at least one fourth opening (K4) communicating with the receiving cavity (A); in a third direction (F3), the at least one first opening (K1) and the at least one fourth opening (K4) are disposed on two sides of the case (100); the third direction (F3) intersects with both the first direction (F1) and the second direction (F2);
each of the plurality of cell modules (200) further comprises a first wiring terminal (203) and a second wiring terminal (204) disposed opposite to the first wiring terminal (203) in the third direction (F3);
the battery pack further comprises: a wire harness group (600) secured in the receiving cavity (A); the wire harness group (600) comprises a plurality of third wiring terminals (601) and a plurality of fourth wiring terminals (602); the plurality of third wiring terminals (601) are arranged in one-to-one correspondence with the plurality of cell modules (200); the plurality of fourth wiring terminals (602) are arranged in one-to-one correspondence with the plurality of cell modules (200);
wherein each of the plurality of third wiring terminals (601) is connected to the first wiring terminal (203) of a corresponding one of the plurality of cell modules (200); the third wiring terminal (601) and the first wiring terminal (203) connected are exposed through the first opening (K1); each of the plurality of fourth wiring terminals (602) is connected to the second wiring terminal (204) of a corresponding one of the plurality of cell modules (200); the fourth wiring terminal (602) and the second wiring terminal (204) connected are exposed through the fourth opening.

13. The battery pack according to claim 12, further comprising: a first cover plate (700), a second cover plate (800) and a third cover plate (900);
wherein the first cover plate (700) is connected to the case (100) and covers the at least one first opening (K1); the second cover plate (800) is connected to the case (100) and covers the at least one second opening (K2); and the third cover plate (900) is connected to the case (100) and covers the at least one fourth opening (K4).

14. The battery pack according to any one of claims 1 to 13, wherein the plurality of cell modules (200) comprise a first cell module, a second cell module and a third cell module that are sequentially distributed; the second cell module is disposed between the first cell module and the third cell module; the first electrical connection end (201) of the first cell module is connected to the first electrical connection end (201) of the second cell module by one of the at least one first electrical connection member (300); the second electrical connection end (202) of the second cell module is connected to the second electrical connection end (202) of the third cell module by one of the at least one second electrical connection member (400).

15. A vehicle, comprising: a vehicle body and the battery pack according to any one of claims 1 to 14, wherein the battery pack is assembled inside the vehicle body.
